# EUROPÄISCHE PATENTANMELDUNG

(11) **EP 1 170 187 A1**
(43) Veröffentlichungstag der Anmeldung: **09.01.2002**
(21) Anmeldenummer: 00810593.4
(22) Anmeldetag: 06.07.2000
(51) Int. Cl.: B61D 3/10, B61D 13/00, B62D 47/02

(54) **Wagenkastengelenk**

(71) Anmelder: Alcan Technology & Management AG, 8212 Neuhausen am Rheinfall (CH)
(72) Erfinder: Leutenegger, Simon, 8006 Zürich (CH)

(57) **Zusammenfassung**

Bei einer Anordnung mit wenigstens zwei gelenkig verbundenen Wagenkästen (10), beispielsweise für Gliederzüge, Gelenkstrassenbahnen, U-Bahnen und Gelenkbussen, erfolgt die Verbindung zwischen benachbarten Wagenkästen (10) über Hydraulikzylinder (22,24,26), wobei jeweils wenigstens zwei Hydraulikzylinder (22a, 22a') über ihre Hydraulikvolumina (Vₐ, V_{b}) unter Bildung eines gemeinsamen Hydraulikvolumens kommunizierend verbunden sind. Die Verbindung führt zu einer optimal verteilten Kraftübertragung in die Wagenkästen und ergibt die grösstmögliche Durchgangsbreite im Übergangsbereich.

## Beschreibung

Die Erfindung betrifft eine Anordnung mit wenigstens zwei gelenkig verbundenen Wagenkästen, beispielsweise für Gliederzüge, Gelenkstrassenbahnen, U-Bahnen und Gelenkbusse.

Bei Gliederzügen aus aneinandergereihten und gelenkig verbundenen Wagenkästen erfolgt die Kraftübertragung im Gelenkbereich über Kurzkupplungen, Einachsendrehgestell- oder Jakobs-Drehgestelllagerungen. Die Nachteile dieser Gelenkverbindungen liegen in der zentralen punktuellen Krafteinleitung unter dem strukturellen Fahrzeugboden mit der entsprechenden Exzentrizität, die schwere, voluminöse und fabrikationsmässig aufwendige Supportteile erfordert und kaum Raum für gerade in diesem Bereich der Drehgestelle wichtige Schalldämmassnahmen bietet.

Bisherige Ansätze, die mit der zentralen punktuellen Krafteinleitung einhergehenden Nachteile durch Verlegung der Kraftübertragung in den Aussenbereich des Fahrzeugquerschnitts zu legen, scheitern am Widerspruch, dass die für die Übertragung von Längskräften notwendigen Verbindungssteifigkeiten eine so grosse Biegesteifigkeit des Wagenkastengelenks hervorrufen, dass im Kurveneinlauf Entgleisungsgefahr besteht.

Der Erfindung liegt die Aufgabe zugrunde, den kraftübertragenden Teil eines Wagenkastengelenks so auszugestalten, dass hohe Verbindungssteifigkeiten erreicht werden können, ohne dass sich hieraus eine grosse Biegesteifigkeit des Wagenkastengelenks ergibt. Zudem soll die Durchgangsbreite im Übergangsbereich zwischen benachbarten Wagenkästen möglichst gross sein.

Zur erfindungsgemässen Lösung der Aufgabe führt bei der eingangs genannten Anordnung, dass die Verbindung zwischen benachbarten Wagenkästen über Hydraulikzylinder erfolgt, wobei jeweils wenigstens zwei Hydraulikzylinder über ihre Hydraulikvolumina unter Bildung eines gemeinsamen Hydraulikvolumens kommunizierend verbunden sind.

Die Hydraulikzylinder können in wenigstens eine Gruppe über wenigstens ein gemeinsames Hydraulikvolumen verbunden sein.

Bevorzugt sind die Hydraulikgesamtvolumina über ein bei Überschreiten eines maximal zulässigen Hydraulikdruckes sich öffnendes oder öffenbares Sperrelement verbunden. Der maximal zulässige Hydraulikdruck entspricht der übertragenen Gesamtkraft. Das Sperrelement ist zweckmässigerweise ein Überlastventil.

Um beispielsweise eine hydropneumatischen Federung des Wagenkastengelenks bereitzustellen, können die gemeinsamen Hydraulikvolumina, ggf. über ein Drosselventil, mit einem Druckspeicher verbunden sein.

Die einzelnen Hydraulikzylinder sind bevorzugt über den Umfangbereich der Stirnflächen der verbundenen Wagenkästen kraftoptimal verteilt angeordnet. Die Hydraulikzylinder können über Befestigungselemente direkt mit den Stirnflächen verbunden sein. Es ist auch möglich, zwischen den Hydraulikzylindern und dem Umfangbereich der Stirnflächen der verbundenen Wagenkästen Federelemente anzuordnen.

Zur Aufnahme von Längskräften sind die Hydraulikzylinder in Wagenkastenlängsrichtung, zur Aufnahme von Quer- und/oder Torsionskräften schief zur Wagenkastenlängsrichtung ausgerichtet.

Die erfindungsgemässe Anordnung weist unter anderem folgende Vorteile auf:
- die Kraftübertragung in die Wagenkästen ist optimal verteilt
- im Übergangsbereich zwischen zwei benachbarten Wagenkästen ergibt sich eine grösstmögliche Durchgangsbreite
- im Bodenbereich entsteht Platz für Schallschutzmassnahmen
- über die Hydraulikzylinder lassen sich die passiven Gelenkeigenschaften der Wagenkastenverbindung zur Erzielung einer höchstmöglichen Laufsicherheit einstellen
- durch Vermeidung eines zentralen Kupplungseinbaus können die Wagenkästen bei tiefen Fabrikationskosten in optimaler Leichtbauweise hergestellt werden
- im Falle eines Aufpralls ergibt sich durch die Möglichkeit einer Kraftbegrenzung, z.B. mit einem Überdruckventil, und damit durch einen definierten Deformationsweg auf definiertem Kraftniveau ein optimales Energieaufnahme- und -absorptionsvermögen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: eine Schrägsicht auf den Verbindungsbereich von zwei Wagenkästen;
- - Fig. 2: eine teilweise geschnittene Seitenansicht auf einen Hydraulikzylinder im Verbindungsbereich von Fig. 1 in Blickrichtung y;
- - Fig. 3: eine Prinzipskizze mit zwei in entgegengesetzter Richtung wirkenden Hydraulikzylindern mit kommunizierenden Hydraulikvolumina.

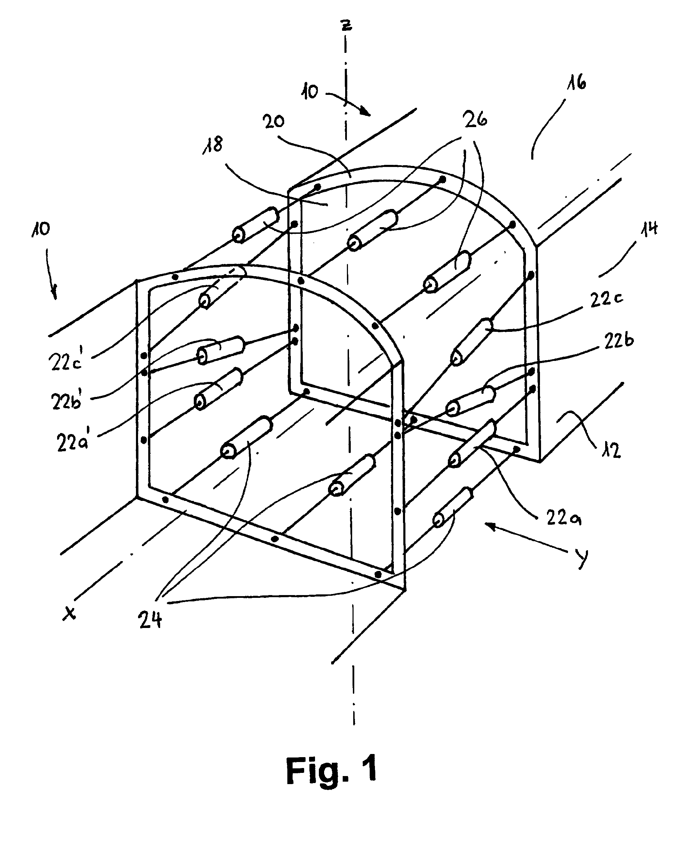

Zwei in Fig. 1 nur teilweise wiedergegebene Wagenkästen 10 weisen einen Boden 12 und zwei von diesem aufragende Seitenwände 14 auf, die über ein Dach 16 zu einem röhrenförmigen Wagenkasten 10 zusammengefügt sind. Die einander gegenüberliegenden Stirnseiten 18 sind in ihrem Umfang- bzw. Randbereich 20 über doppeltwirkende Hydraulikzylinder 22, 24, 26 miteinander verbunden.

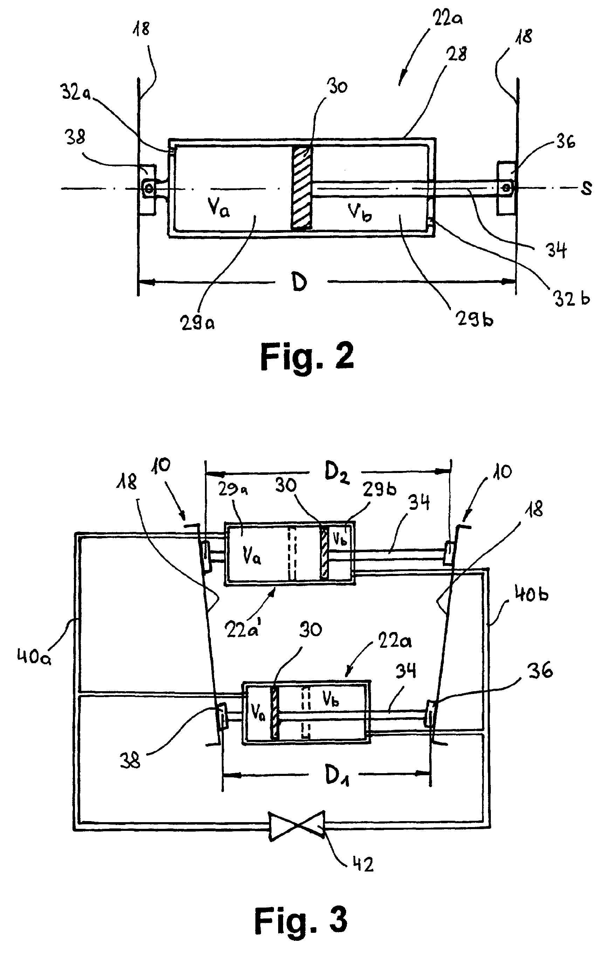

Die Wirkungsweise der Hydraulikzylinder ist in Fig. 2 am Beispiel des die Seitenwände 14 in der Wagenlängsachse x miteinander verbindenden Hydraulikzylinders 22a gezeigt. Der doppeltwirkende Hydraulikzylinder 22a umfasst einen Zylinder 28 und einen in diesem gleitend verschiebbaren Kolben 30, der den Zylinderaum 29 in zwei Teilräume 29a, b unterteilt. Jeder Zylinderteilraum 29a, b ist im Gebrauchszustand mit Hydraulikflüssigkeit mit einem Volumen Vₐ, V_{b} entsprechend den Zylinderteilräumen 29a, b gefüllt. Die Zylinderteilräume 29a, b sind mit je einer Öffnung 32a, b versehen, die über weiter unten in Zusammenhang mit Fig. 4 erläuterte Hydraulikleitungen mit entsprechenden Zylinderteilräumen anderer Hydraulikzylinder kommunizierend verbunden sind. Sämtliche untereinander verbundenen Hydraulikzylinder bilden mit ihren Hydraulikvolumina Vₐ, V_{b} jeweils unter Bildung eines gemeinsamen Hydraulikvolumens V_{A}, V_{B} gesamthaft ein geschlossenes System.

Dem Kolben 30 des Hydraulikzylinders 22a ist in der Zylinderlängsachse s eine Kolbenstange 34 aufgesetzt, die über ein Befestigungselement 36 an der Stirnseite 18 eines der Wagenkästen 10 befestigt ist. Auf der der Kolbenstange 34 entgegengesetzten Seite ist der Zylinder 22a über ein weiteres Befestigungselement 38 an der Stirnseite 18 des anderen Wagenkastens 10 montiert. Bei einer Vergrösserung des Abstandes D der Stirnseiten 18 von zwei miteinander verbundenen Wagenkästen 10 vergrössert sich auch der Abstand zwischen den beiden Befestigungselementen 36, 38 des Hydraulikzylinders 22a. Entsprechend vergrössert sich der Zylinderteilraum 29a bei gleichzeitiger Verkleinerung des Zylinderteilraumes 29b. Gleiches gilt für die Volumina Vₐ und V_{b} wobei die Hydraulikflüssigkeit in gleichem Mass, wie sich die Volumina Vₐ, V_{b} verändern, über die Öffnung 32a in den Zylinderteilraum 29a ein- und über die Öffnung 32b aus dem Teilzylinderraum 29b ausströmt.

Fig. 3 zeigt das Zusammenwirken miteinander kommunizierend verbundener Hydraulikzylinder bei einer Anordnung mit zwei Hydraulikzylindern, im gezeigten Beispiel mit den beiden einander gegenüberliegenden Hydraulikzylindern 22a und 22a'.

In einem normalen Betriebszustand, wie er beispielsweise bei Geradeausfahrt eines Zuges herrscht, werden zwischen zwei benachbarten Wagenkästen 10 nur geringe Kräfte übertragen. Die Kolben 30 in den beiden Hydraulikzylindern 22a, 22a' sind in einer Grundstellung, üblicherweise in der Mitte des Zylinderraumes 29. Wird nun eine Kurve eingeleitet, so verkleinert sich der Abstand D der beiden Wagenkästen 10 auf der Kurveninnenseite (D1) und vergrössert sich entsprechend auf der Kurvenaussenseite (D2). Entsprechend wird auch die Länge des Hydraulikzylinders 22a auf der Kurveninnenseite verkürzt und die Länge des Hydraulikzylinders 22a' auf der Kurvenaussenseite vergrössert. Im Innern der Hydraulikzylinder 22a, 22a' verschiebt sich der Kolben 30 so, dass sich der Zylinderteilraum 29a entsprechend verkleinert bzw. vergrössert. Da die entsprechenden Volumina Vₐ der Hydraulikflüssigkeit über eine Sammelleitung 40a kommunizierend verbunden sind, bewirkt jede Verkürzung des Hydraulikzylinders 22a automatisch eine Verlängerung des Hydraulikzylinders 22a'. Bei der Übertragung der Kräfte zwischen zwei verbundenen Wagenkästen 10, die beim gewählten Beispiel auf zwei entgegengesetzten Seiten erfolgt, nämlich auf der Kurveninnen- bzw. aussenseite, ergibt sich über die kommunizierenden Hydraulikvolumina Vₐ automatisch eine optimale Kraftverteilung zwischen den beiden Verbindungen.

In gleicher Weise wie die Hydraulikvolumina Vₐ sind auch die Volumina V_{b} über eine Sammelleitung 40b verbunden. Das Totalvolumen V_{A} als Summe der Teilvolumina Vₐ ist vom Totalvolumen V_{B} als Summe der Teilvolumina V_{b} durch ein zwischen den Sammelleitungen 40a, b angeordnetes Überlastventil 42 getrennt. Dieses Überlastventil 42 dient dazu, dass beim Überschreiten des höchstzulässigen Betriebsdruckes in den Hydraulikzylindern, z.B. infolge eines Aufpralls ein Teil des Gesamtvolumens V_{A} von der Sammelleitung 40a über das Überlastventil 42 in die Sammelleitung 40b strömt und demzufolge das Gesamtvolumen V_{B} vergrössert. Je nach Richtung der einwirkenden Kräfte kann auch ein Teil des Gesamtvolumens V_{B} in das Gesamtvolumen V_{A} fliessen.

Das Grundprinzip des in Fig. 3 gezeigten Beispiels mit zwei zusammenwirkenden Hydraulikzylindern 22a, 22a' kann selbstverständlich auf beliebige Gruppen von Hydraulikzylindern 22, 24, 26 angewendet werden. Ebenso können die Hydraulikvolumina einer oder mehrerer Gruppen von Hydraulikzylindern zu einem oder mehreren Hydraulikvolumina kommunizierend verbunden sein.

Es ist auch möglich, in die Sammelleitungen 40a, b Pumpen zu schalten, um ggf. den Hydraulikdruck zu erhöhen oder anstelle des Überlastventils 42 die Gesamtvolumina V_{A} bzw. V_{B} zu verändern. Derartige Pumpen können beispielsweise über Kraftsensoren gesteuert werden, so dass bei sich verändernden Kräfteverhältnissen eine weiter optimierte Steuerung der Hydraulikzylinder erfolgen kann. Durch entsprechende Wahl von Durchströmquerschnitten für die Hydraulikflüssigkeit oder durch in Hydraulikleitungen geschaltete Ventile mit veränderbarem Durchströmquerschnitt können die Hydraulikzylinder in ihren Steifigkeits- und Dämpfungs-Charakteristiken individuell optimal eingestellt werden.

Wie in Fig. 1 beispielhaft gezeigt, können die in verschiedene Gruppen zusammengefassten (in der Zeichnung nicht dargestellt) Hydraulikzylinder in unterschiedlichen Richtungen kraftoptimal über den Umfangbereich 20 der Stirnseiten 18 der Wagenkästen 10 verteilt angeordnet sein, teils in Wagenlängsrichtung x zur Aufnahme der Längskräfte, teils schief dazu zur Aufnahme von Querkräften oder von Torsionskräften bezüglich der Drehachse z des Wagenkastengelenks. Im gezeigten Beispiel sind die Hydraulikzylinder 22b, 22c bzw. 22b', 22c' schief zur Wagenlängsrichtung x angeordnet.

## Patentansprüche

1. Anordnung mit wenigstens zwei gelenkig verbundenen Wagenkästen (10), beispielsweise für Gliederzüge, Gelenkstrassenbahnen, U-Bahnen und Gelenkbusse,
**dadurch gekennzeichnet, dass**
die Verbindung zwischen benachbarten Wagenkästen (10) über Hydraulikzylinder (22,24,26) erfolgt, wobei jeweils wenigstens zwei Hydraulikzylinder (22a, 22a') über ihre Hydraulikvolumina (Vₐ, V_{b}) unter Bildung eines gemeinsamen Hydraulikvolumens (V_{A}, V_{B}) kommunizierend verbunden sind.

2. Wagenkastenanordnung nach Anspruch 1, **dadurch gekennzeichnet, dass** die Hydraulikzylinder (22,24,26) in wenigstens einer Gruppe über wenigstens ein gemeinsames Hydraulikvolumen V_{A}, V_{B} verbunden sind.

3. Wagenkastenanordnung nach Anspruch 1 oder 2, **dadurch gekennzeichnet, dass** die gemeinsamen Hydraulikvolumina (V_{A}, V_{B}) über ein bei Überschreiten eines maximal zulässigen Hydraulikdruckes sich öffnendes oder öffenbares Sperrventil (42) verbunden sind.

4. Wagenkastenanordnung nach Anspruch 3, **dadurch gekennzeichnet, dass** das Sperrelement ein Überlastventil (42) ist.

5. Wagenkastenanordnung nach einem der Ansprüche 1 bis 4, **dadurch gekennzeichnet, dass** die gemeinsamen Hydraulikvolumina (V_{A}, V_{B}), ggf. über ein Drosselventil, mit einem Druckspeicher verbunden sind.

6. Wagenkastenanordnung nach einem der Ansprüche 1 bis 5, **dadurch gekennzeichnet, dass** die Hydraulikzylinder (22,24,26) über den Umfangbereich (20) der Stirnflächen (18) der verbundenen Wagenkästen (10) kraftoptimal verteilt angeordnet sind.

7. Wagenkastenanordnung nach Anspruch 6, **dadurch gekennzeichnet, dass** zwischen den Hydraulikzylindern (22,24,26) und dem Umfangbereich (20) der Stirnflächen (18) der verbundenen Wagenkästen (10) Federelemente angeordnet sind.

8. Wagenkastenanordnung nach Anspruch 6 oder 7, **dadurch gekennzeichnet, dass** die Hydraulikzylinder (22,24,26) in Wagenkastenlängsrichtung (x) zur Aufnahme von Längskräften und schief dazu zur Aufnahme von Quer- und/oder Torsionskräften ausgerichtet sind.

9. Verwendung einer Wagenkastenanordnung nach einem der Ansprüche 1 bis 8 für Gliederzüge, Gelenkstrassenbahnen, U-Bahnen und Gelenkbusse.
